# EUROPEAN PATENT SPECIFICATION

(11) **EP 3 621 338 B1**
(45) Date of publication and mention of the grant of the patent: **10.07.2024**
(21) Application number: 18834987.2
(22) Date of filing: 20.07.2018
(51) Int. Cl.: H04W 24/02, H04W 88/08

(54) **HIGH FREQUENCY 5G BASE STATION AND HIGH FREQUENCY 5G BASE STATION SIGNAL PROCESSING METHOD**
HOCHFREQUENZ-5G-BASISSTATION UND SIGNALVERARBEITUNGSVERFAHREN FÜR HOCHFREQUENZ-5G-BASISSTATION
STATION DE BASE 5G HAUTE FRÉQUENCE, ET PROCÉDÉ DE TRAITEMENT DE SIGNAL DE STATION DE BASE 5G HAUTE FRÉQUENCE

(30) Priority: 21.07.2017 CN 201710601792
(43) Date of publication of application: 11.03.2020
(73) Proprietor: ZTE Corporation, Shenzhen, Guangdong 518057 (CN)
(72) Inventor: QIANG, Wen, Shenzhen Guangdong 518057 (CN); SHI, Yalong, Shenzhen Guangdong 518057 (CN)
(74) Representative: Herzog IP Patentanwalts GmbH
(86) International application number: PCT/CN2018/096518
(87) International publication number: WO 2019/015680

(56) References cited:
- WO-A1-2016/066104
- CN-A- 1 548 983
- CN-A- 101 442 840
- US-A1- 2011 317 746
- US-A1- 2015 365 934
- US-A1- 2017 195 014
- "Motivation for Study on Integrated Access and Backhaul for NR AT&T", no. DUBROVNIK, CROATIA; 20170306 - 20170309, 5 March 2017 (2017-03-05), XP051233659, Retrieved from the Internet <URL:http://www.3gpp.org/ftp/Meetings_3GPP_SYNC/RAN/Docs/> [retrieved on 20170305]

## Description

### Field of the Invention

The present disclosure relates to the technical field of mobile communication, and for example, to a high frequency 5G base station and a high frequency 5G base station signal processing method.

### Background of the Invention

At present, a high frequency 5G mobile base station adopts a 3G/4G scheme. That is, a wireless access network is constructed by a Radio Remote Unit plus a Building Baseband Unit (RRU+BUU), and is connected to a core network via a transmission network constructed with optical fibers or microwaves. Optical fiber connection is required between the Radio Remote Unit (RRU) and the Building Baseband Unit (BBU). One BBU may support multiple RRUs. Therefore, for the high frequency 5G base station, a related networking approach has many drawbacks, including that: there are many physical interfaces, and it is required to use different ports to implement a transmission connection with a core network side and to implement a coverage connection with a user side; many processing modules are involved in a data conversion process between the core network side and the user side, and connection stability among modules is poor; and stability and reliability of the whole network are relatively poor, and meanwhile user's experience on the provided mobile service is unsatisfactory.

US2017195014 A1 discloses a relaying node, which can be a 5G small base station. The relaying node includes a communication interface that performs decoding of signal received from a transmitting end (e.g. a donor base station), encodes it and sends it to a receiving end (e.g. a UE) according to the physical layer standard. The procedure comprises RF down and up-conversion, filtering, amplification and analog/digital conversion, that implicitly uses the same high frequency RF components included in the communication interface. The relaying node may furthermore include a separate backhaul communications interface for communication with the donor base station, that performs corresponding transmission and reception tasks.

### Summary of the Invention

A summary of the subject matter defined in the present disclosure is provided below. The summary is not for the purpose of limiting the protection scope of the claims.

The invention is defined by the independent claims. The dependent claims specify the preferred embodiments of the invention. The following aspects disclosed in the summary section are not according to the invention and are provided for illustrative purposes to support a better understanding of the invention.

The present disclosure provides a high frequency 5G base station and a high frequency 5G base station signal processing method, so as to avoid the phenomenon of poor stability caused by the complex structure of the high frequency 5G base station in related art.

According to one aspect of the present disclosure, a high frequency 5G base station is provided. The high frequency 5G base station includes: a high frequency signal transceiver module, signal processing module, and a baseband data processing module. The high frequency signal transceiver module is configured to transmit at least one of a high frequency analog transmission signal and a high frequency analog coverage signal that are received to the signal processing module, and emit at least one of a high frequency analog transmission signal and a high frequency analog coverage signal that are fed back by the signal processing module. The signal processing module is configured to process the received high frequency analog transmission signal to obtain a low frequency digital transmission signal and transmit the obtained low frequency digital transmission signal to the baseband data processing module, and to process the received high frequency analog coverage signal to obtain a low frequency digital coverage signal and transmit the obtained low frequency digital coverage signal to the baseband data processing module; and the signal processing module is configured to process a low frequency digital transmission signal that is transmitted from the baseband data processing module to obtain a high frequency analog transmission signal and transmit the obtained high frequency analog transmission signal to the high frequency signal transceiver module, and to process a low frequency digital coverage signal that is transmitted from the baseband data processing module to obtain a high frequency analog coverage signal and transmit the obtained high frequency analog coverage signal to the high frequency signal transceiver module. The baseband data processing module is configured to convert the low frequency digital coverage signal that is transmitted from the signal processing module into the low frequency digital transmission signal and transmit the low frequency digital transmission signal that is obtained by conversion to the signal processing module, and to convert the low frequency digital transmission signal that is transmitted from the signal processing module into the low frequency digital coverage signal and transmit the low frequency digital coverage signal that is obtained by conversion to the signal processing module.

The present disclosure further provides a high frequency 5G base station signal processing method, which includes: receiving at least one of a high frequency analog transmission signal and a high frequency analog coverage signal; performing signal processing to the high frequency analog transmission signal to obtain a low frequency digital transmission signal, and performing signal processing to the high frequency analog coverage signal to obtain a low frequency digital coverage signal; performing baseband data processing to the low frequency digital coverage signal so as to convert the low frequency digital coverage signal into a low frequency digital transmission signal, and performing baseband data processing to the low frequency digital transmission signal so as to convert the low frequency digital transmission signal into a low frequency digital coverage signal; performing signal processing to the low frequency digital transmission signal so as to obtain a high frequency analog transmission signal, and performing signal processing to the low frequency digital coverage signal so as to obtain a high frequency analog coverage signal; and emit the high frequency analog transmission signal and the high frequency analog coverage signal.

The present disclosure further provides a computer-readable storage medium, in which a high frequency 5G base station signal processing program is stored, and the high frequency 5G base station signal processing program, when being executed by a processor, implements the above high frequency 5G base station signal processing method.

### Brief Description of the Drawings

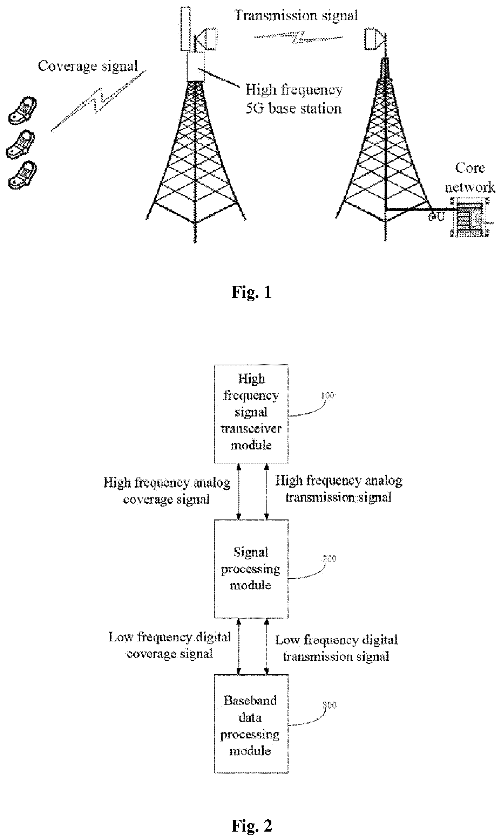

Various other advantages and benefits will become clear to one ordinary skilled in the art upon reading the following detailed description of preferred embodiments. The accompanying drawings servers for the purpose of illustrating the preferred embodiments and should not be considered as limitation to the present disclosure. Moreover, the same reference numerals refer to the same components throughout the drawings. In the following, embodiments of the invention are described with particular reference to Figs. 2, 3 and 4. The other embodiments and examples of the disclosure are provided for illustrative purposes to support a better understanding of the invention.

In the drawings:
Fig. 1 schematically shows an application scenario of a high frequency 5G base station signal processing method according to an embodiment of the present disclosure;
Fig. 2 schematically shows a structure of a high frequency 5G base station of Embodiment 1 of the present disclosure;
Fig. 3 schematically shows a structure of a high frequency 5G base station of Embodiment 2 of the present disclosure;
Fig. 4 schematically shows a structure of a high frequency 5G base station of Embodiment 3 of the present disclosure;
Fig. 5 schematically shows a baseband data processing process in a high frequency 5G base station signal processing method of Embodiment 4 of the present disclosure;
Fig. 6 schematically shows a hardware structure of a high frequency 5G base station of Embodiment 5 of the present disclosure;
Fig. 7 schematically shows a baseband data processing process in a high frequency 5G base station signal processing method of Embodiment 6 of the present disclosure; and
Fig. 8 schematically shows a flowchart of a high frequency 5G base station signal processing method of Embodiment 7 of the present disclosure;

### Detailed Description of the Embodiments

Exemplary embodiments of the present disclosure will be described in a more detailed way below with reference to the accompanying drawings. Although the exemplary embodiments disclosed are shown in the accompanying drawings, it should be understood that the present disclosure may be implemented in various forms and should not be limited by the embodiments set forth herein. Instead, these embodiments are provided so that the present disclosure can be understood more thoroughly and that the scope of the present disclosure can be fully conveyed to those skilled in the art.

Fig. 1 schematically shows an application scenario of a high frequency 5G base station signal processing method provided in an embodiment of the present disclosure. The high frequency 5G base station as shown in Fig. 1 is used to perform interconnection and conversion between a coverage signal at a user side and a transmission signal at a core network side. A signal transmitted from the user side to the core network side is an uplink signal, which includes an uplink coverage signal from a user to a base station and an uplink transmission signal from the base station to the core network side; a signal transmitted from the core network side to the user side is a downlink signal, which includes a downlink transmission signal from the core network to the base station and a downlink coverage signal from the base station to the user.

Fig. 2 schematically shows a structure of a high frequency 5G base station of Embodiment 1 of the present disclosure. The high frequency 5G base station as shown in Fig. 2 includes a high frequency signal transceiver module 100, a signal processing module 200 and a baseband data processing module 300.

The high frequency signal transceiver module 100 is configured to transmit at least one of a received high frequency analog transmission signal and a received high frequency analog coverage signal to the signal processing module 200, and emit at least one of a high frequency analog transmission signal and a high frequency analog coverage signal that are fed back by the signal processing module 200.

In an embodiment, the high frequency analog transmission signal is an interaction signal between the high frequency 5G base station and a core network side, and the high frequency analog transmission signal includes a microwave signal, an optical fiber signal and the like. The high frequency analog coverage signal is an interaction signal between the high frequency 5G base station and the user side. In practice, the high frequency signal transceiver module includes two ports, i.e., a coverage antenna port for receiving and transmitting the high frequency analog coverage signal, which is configured to connect to a coverage antenna, and a microwave antenna port for receiving and transmitting the high frequency analog transmission signal, which is configured to connect to a microwave antenna.

The signal processing module 200 is configured to process the received high frequency analog transmission signal to obtain a low frequency digital transmission signal and transmit this low frequency digital transmission signal obtained by the processing to the baseband data processing module 300, and to process the received high frequency analog coverage signal to obtain a low frequency digital coverage signal and transmit this low frequency digital coverage signal obtained by the processing to the baseband data processing module 300; and the signal processing module 200 is configured to process a low frequency digital transmission signal transmitted from the baseband data processing module 300 to obtain a high frequency analog transmission signal and transmit this high frequency analog transmission signal obtained by the processing to the high frequency signal transceiver module 100, and to process a low frequency digital coverage signal transmitted from the baseband data processing module 300 to obtain a high frequency analog coverage signal and transmit this high frequency analog coverage signal obtained by the processing to the high frequency signal transceiver module 100.

In an embodiment, before the high frequency 5G base station performs baseband data processing to the received high frequency analog signal, it is required to convert the high frequency analog signal into a low frequency digital signal. Since a coverage signal and a transmission microwave signal that are received by the high frequency 5G base station operate in proximate frequency bands, the coverage signal and the transmission signal may share common reception filtering, power control and down-conversion, so that processing to the high frequency coverage analog signal and processing to the high frequency analog transmission signal can be enbaled concurrently using one signal processing module.

The baseband data processing module 300 is configured to convert the low frequency digital coverage signal transmitted from the signal processing module 200 into a low frequency digital transmission signal and transmit the low frequency digital transmission signal obtained by the conversion to the signal processing module 200; and the baseband data processing module 300 is configured to convert the low frequency digital transmission signal transmitted from the signal processing module 200 into a low frequency digital coverage signal and transmit the low frequency digital coverage signal obtained by the conversion to the signal processing module 200.

In an embodiment, the baseband data processing module, by using a signal processing process of demodulating, de-verifying, exchanging, verifying and modulating, converts the received low frequency digital transmission signal into the low frequency digital coverage signal and converts the received low frequency digital coverage signal into the low frequency digital transmission signal.

For the high frequency 5G base station provided by the present embodiment, a high frequency signal including at least one of the high frequency transmission signal and the high frequency coverage signal is converted using the signal processing module 200, wherein the high frequency transmission signal and the high frequency coverage signal are respectively converted into low frequency signals that are to be processed by the baseband data processing module. After that, the baseband data processing module 300 performs baseband processing and signal format exchanging. Then, the signal processing module converts a low frequency coverage signal and a low frequency transmission signal both converted by the baseband data processing module into a high frequency coverage signal and a high frequency transmission signal and then transmit them. Based on a modularization and SDR ( Software Defined Radio) design philosophy, the high frequency 5G base station provided by the present embodiment can improve network performance, reduce network cost, enhance network expansion flexibility, reduce network management complexity, and realize a coverage function and a transmission function at the same time. The baseband data processing module and the signal processing module may be configured as two separate hardware modules so that modular assembling can be achieved. In this way, flexible networking, rapid network building and simple network management and maintenance can be realized as long as a working voltage is provided.

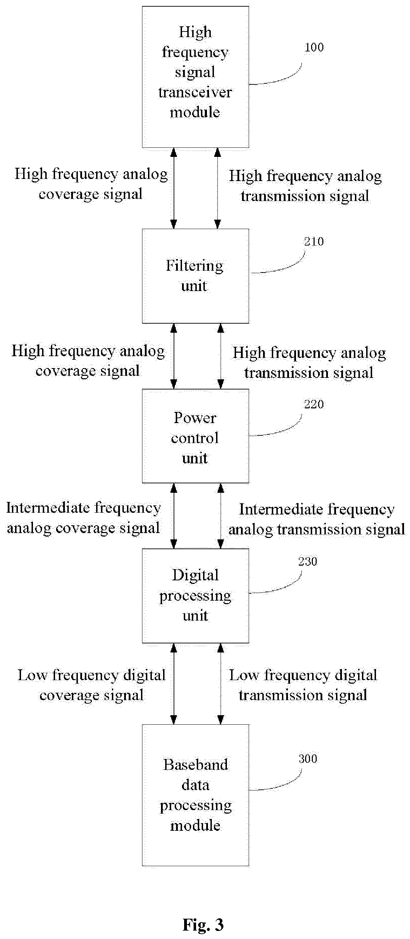

Fig. 3 schematically shows a structure of a high frequency 5G base station of Embodiment 2 of the present disclosure. The high frequency 5G base station as shown in Fig. 3 includes a high frequency signal transceiver module 100, a filtering unit 210, a power control unit 220, a digital processing unit 230 and a baseband data processing module 300.

In an embodiment, the high frequency signal transceiver module 100 may be the same as the high frequency signal transceiver module 100 in Embodiment 1.

The filtering unit 210 is configured to filter at least one of the received high frequency analog transmission signal and the received high frequency analog coverage signal, and transmit at least one of the filtered high frequency analog transmission signal and the filtered high frequency analog coverage signal to the power control unit, and to filter at least one of a high frequency analog transmission signal and a high frequency analog coverage signal that are fed back by the power control unit, and transmit at least one of the filtered high frequency analog transmission signal and the filtered high frequency analog coverage signal to the high frequency signal transceiver module 100.

In an embodiment, since the high frequency analog transmission signal and the high frequency analog coverage signal that are received and transmitted by the high frequency 5G base station have proximate frequency bands, one filtering unit, such as a tunable filter, may be employed to filter both of the above two signals while being received and transmitted, thereby performing suppression of out-of-band useless signals and elimination of stray signals.

The power control unit 220 is configured to convert the received high frequency analog coverage signal into an intermediate frequency analog coverage signal and transmit this intermediate frequency analog coverage signal obtained by the conversion to the digital processing unit 230, and to convert the received high frequency analog transmission signal into an intermediate frequency analog transmission signal and transmit this intermediate frequency analog transmission signal obtained by the conversion to the digital processing unit 230; and the power control unit 220 is configured to convert an intermediate frequency analog coverage signal transmitted from the digital processing unit 230 into a high frequency analog coverage signal and transmit this high frequency analog coverage signal obtained by the conversion to the filtering unit 210, and to convert an intermediate frequency analog transmission signal transmitted from the digital processing unit 230 into a high frequency analog transmission signal and transmit this high frequency analog transmission signal to the filtering unit 210.

In an embodiment, the power control unit 220 is mainly configured to down-convert a high frequency signal into an intermediate frequency signal and up-convert an intermediate frequency signal to a high frequency signal. For better frequency conversion, the power control unit generally includes a transmitting frequency conversion portion which is configured for up-conversion and a receiving frequency conversion portion which is configured for down-conversion.

In an embodiment, the power control unit 220 includes a receiving subunit and a transmitting subunit.

The receiving subunit is configured to perform signal amplification and down-conversion to the high frequency analog coverage signal transmitted from the filtering unit 210 to obtain the intermediate frequency analog coverage signal and transmit this intermediate frequency analog coverage signal to the digital processing unit 230; and the receiving subunit is further configured to perform signal amplification and down-conversion to the high frequency analog transmission signal transmitted from the filtering unit 210 to obtain the intermediate frequency analog transmission signal and transmit this intermediate frequency analog transmission signal to the digital processing unit 230.

The transmitting subunit is configured to perform power amplification and up-conversion to the intermediate frequency analog coverage signal transmitted from the digital processing unit 230 to obtain the high frequency analog coverage signal and transmit this high frequency analog coverage signal to the filtering unit 210; and the transmitting subunit is further configured to perform power amplification and up-conversion to the intermediate frequency analog transmission signal transmitted from the digital processing unit 230 to obtain the high frequency analog transmission signal and transmit this high frequency analog transmission signal to the filtering unit 210.

The digital processing unit 230 is configured to convert the received intermediate frequency analog coverage signal into a low frequency digital coverage signal and transmit this low frequency digital coverage signal obtained by the conversion to the baseband data processing module 300, and to convert the received intermediate frequency analog transmission signal into a low frequency digital transmission signal and transmit this low frequency digital transmission signal obtained by the conversion to the baseband data processing module 300; and the digital processing unit 230 is configured to convert a low frequency digital coverage signal transmitted from the baseband data processing module 300 into an intermediate frequency analog coverage signal and transmit this intermediate frequency analog coverage signal obtained by the conversion to the power control unit 220, and to convert a low frequency digital transmission signal transmitted from the baseband data processing module 300 into an intermediate frequency analog transmission signal and transmit this intermediate frequency analog transmission signal obtained by the conversion to the power control unit 220.

In an embodiment, the digital processing unit 230 is configured to perform conversion between an analog signal and a digital signal, and to perform conversion between an intermediate frequency signal and a low frequency signal.

In an embodiment, the digital processing unit 230 includes a coverage digital processing subunit and a transmission digital processing subunit.

The coverage digital processing subunit is configured to perform analog-to-digital conversion and down-conversion to the received intermediate frequency analog coverage signal to obtain a low frequency digital coverage signal and transmit this low frequency digital coverage signal to the baseband data processing module 300; and the coverage digital processing subunit is configured to perform up-conversion, filtering and peak clipping processing to the low frequency digital coverage signal transmitted from the baseband data processing module 300 to obtain an intermediate frequency analog coverage signal and transmit this intermediate frequency analog coverage signal to the transmitting subunit.

The transmission digital processing subunit is configured to perform analog-to-digital conversion and down-conversion to the received intermediate frequency analog transmission signal to obtain a low frequency digital transmission signal and transmit this low frequency digital transmission signal to the baseband data processing module 300; and the transmission digital processing subunit is configured to perform up-conversion, filtering and peak clipping processing to the low frequency digital transmission signal transmitted from the baseband data processing module 300 to obtain an intermediate frequency analog transmission signal and transmit this intermediate frequency analog transmission signal to the transmitting subunit.

In an embodiment, the baseband data processing module 300 may be the same as the baseband data processing module 300 in Embodiment 1.

For the high frequency 5G base station provided by the present embodiment, the signal processing module is divided into a filtering unit, a power control unit and a digital processing unit. Based on a characteristic that the high frequency transmission signal and the high frequency coverage signal have proximate frequency bands, signal processing to the high frequency coverage signal and to the high frequency transmission signal can be performed concurrently by means of one hardware module, including that using a same tunable filter to perform filtering to both the high frequency transmission signal and the high frequency coverage signal, and that using a same power control unit to perform power control to both the high frequency transmission signal and the high frequency coverage signal. In this way, modular assembling of the high frequency 5G base station can be realized, thereby realizing flexible networking, rapid network establishment and simple network management and maintenance.

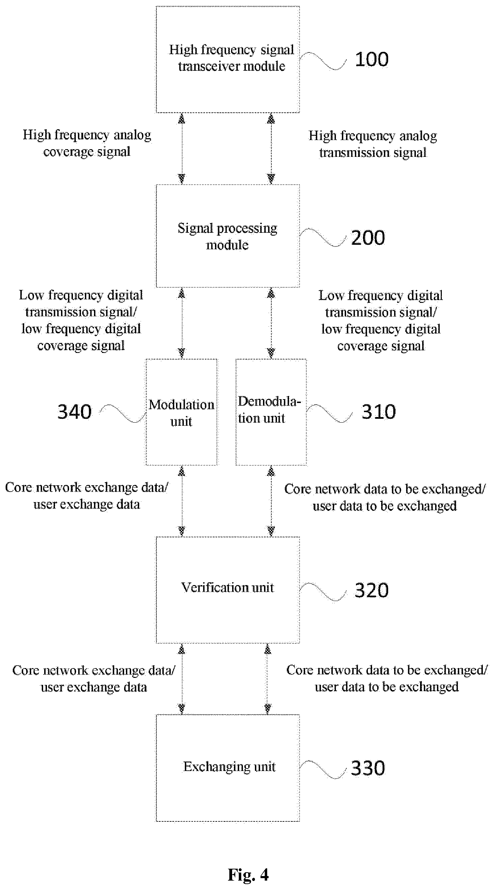

Fig. 4 schematically shows a structure of a high frequency 5G base station of Embodiment 3 of the present disclosure. The high frequency 5G base station as shown in Fig. 4 includes a high frequency signal transceiver module 100, a signal processing module 200, a demodulation unit 310, a verification unit 320, an exchanging unit 330, and a modulation unit 340.

In an embodiment, the high frequency signal transceiver module 100 is the same as the high frequency signal transceiver module 100 in Embodiment 1.

In an embodiment, the signal processing module 200 is the same as the signal processing module 200 in Embodiment 1.

The demodulation unit 310 is configured to demodulate the received low frequency digital coverage signal to obtain user data to be exchanged and transmit the user data to be exchanged to the verification unit 320; and demodulation unit 310 is configured to demodulate the received low frequency digital transmission signal to obtain core network data to be exchanged and transmit the core network data to be exchanged to the verification unit 320.

In an embodiment, the demodulation unit 310 performs resource de-mapping, de-precoding, layer de-mapping, de-modulation, rate de-matching to the received low frequency digital coverage signal and the received low frequency digital transmission signal to obtain user traffic data and core network traffic data respectively.

The verification unit 320 is configured to de-verify the received user data to be exchanged and the received core network data to be exchanged, and transmit the de-verified user data to be exchanged and the de-verified core network data to be exchanged to the exchanging unit 330; and the verification unit 320 is configured to verify user exchange data and core network exchange data that are transmitted from the exchanging unit 330, and transmit the verified user exchange data and the verified core network exchange data to the modulation unit 340.

In an embodiment, the verification unit 320 is configured to de-verify a signal entering the exchanging unit 330 and verify a signal output from the exchanging unit 330. De-verifying and verifying may be performed concurrently by means of a same verification module, or may be performed respectively by a de-verification subunit and a verification subunit.

The exchanging unit 330 is configured to convert the received user data to be exchanged into core network exchange data and transmit this core network exchange data to the verification unit 320; and the exchanging unit 330 is configured to convert the received core network data to be exchanged into user exchange data and transmit this user exchange data to the verification unit 320.

In an embodiment, the exchanging unit 330, after converting the received user data to be exchanged into the core network exchange data, completes conversion of the high frequency coverage signal that is received by the high frequency 5G base station into the core network exchange data that may be transmitted to the core network side; and the exchanging unit 330, after converting the received core network data to be exchanged into the user exchange data, completes conversion of the high frequency transmission signal that is received by the high frequency 5G base station into the user exchange data that may be transmitted to the user side.

The modulation unit 340 is configured to modulate the received core network exchange data into a low frequency digital transmission signal and transmit this low frequency digital transmission signal to the signal processing module 200; and the modulation unit 340 is configured to modulate the received user exchange data into a low frequency digital coverage signal and transmit this low frequency digital coverage signal to the signal processing module 200.

In an embodiment, the modulation unit 340, after performing channel coding, rate matching, modulation, general purpose multiplexing to the core network exchange data verified and the user exchange data verified that are received and have already been verified, modulates the verified core network exchange data and verified the user exchange data respectively into the low frequency digital transmission signal and the low frequency digital coverage signal.

In the present embodiment, the baseband data processing module includes a demodulation unit, a verification unit, an exchanging unit and a modulation unit, and baseband data processing to a transmission signal and to a coverage signal may be performed concurrently by using a same hardware module. Based on a modularization and software defined radio (SDR) design philosophy, the high frequency 5G base station provided by the present embodiment improves network performance, reduces network cost, enhances network expansion flexibility, reduces network management complexity, and realizes a coverage function and a transmission function at the same time.

In an embodiment, the demodulation unit 310 includes a coverage demodulation subunit and a transmission demodulation subunit.

The coverage demodulation subunit is configured to perform resource de-mapping, de-precoding, layer de-mapping, demodulation, rate de-matching to the received low frequency digital coverage signal so as to modulate it into user data to be exchanged, and transmit the user data to be exchanged to the verification unit 320.

The transmission demodulation subunit is configured to perform resource de-mapping, general purpose de-multiplexing, layer de-mapping, demodulation, rate de-matching to the received low frequency digital transmission signal so as to modulate it into core network data to be exchanged, and transmit the core network data to be exchanged to the verification unit 320.

In the present embodiment, the demodulation unit demodulates the coverage signal using the coverage demodulation subunit, and demodulates the transmission signal using the transmission demodulation subunit. Different modules are used to respectively demodulate the coverage signal and transmission signal, and these two modules share the verification unit and the signal processing module that are connected thereto. In this way, modular configuration of the high frequency 5G base station is achieved, thereby enhancing network expansion flexibility.

In an embodiment, the modulation unit 340 includes a transmission modulation subunit and a coverage modulation subunit.

The transmission modulation subunit is configured to perform channel coding, rate matching, modulation, general purpose multiplexing, resource mapping, fast Fourier transform and high-order modulation to the received core network exchange data so as to modulate it into a low frequency digital transmission signal, and transmit the low frequency digital transmission signal to the signal processing module 200.

The coverage modulation subunit is configured to perform channel coding, rate matching, modulation, layer mapping, resource mapping, fast Fourier transform and orthogonal frequency division multiplexing to the received user exchange data so as to modulate it into a low frequency digital coverage signal, and transmit the low frequency digital coverage signal to the signal processing module 200.

In the present embodiment, the modulation unit modulates the coverage signal using the coverage modulation subunit and modulates the transmission signal using the transmission modulation subunit. Different modules are used to respectively modulate the coverage signal and the transmission signal output by an exchanging module, and these two modules share the verification unit and the signal processing module that are connected thereto. In this way, modular configuration of the high frequency 5G base station is achieved, thereby enhancing network expansion flexibility.

In an embodiment, the baseband data processing module 300 further includes a separation unit, which is configured to separate the low frequency digital coverage signal or the low frequency digital transmission signal from a serial signal that is received and transmit the low frequency digital coverage signal or the low frequency digital transmission signal to the demodulation unit 310. The separation unit includes: a coverage separation subunit, which is configured to separate the low frequency digital coverage signal from the received serial signal by means of filtering resampling and fast Fourier transform and then transmit the low frequency digital coverage signal to the demodulation unit 310; and a transmission separation subunit, which is configured to separate the low frequency digital transmission signal from the received serial signal by means of microwave data sampling and fast Fourier transform and then transmit the low frequency digital transmission signal to the demodulation unit 310.

In an embodiment, the high frequency coverage signal and the high frequency transmission signal, prior to entering the baseband data processing module 300, are respectively processed and converted into a low frequency digital coverage signal or a low frequency digital transmission signal. The baseband data processing module 300 also supports a serial-parallel function for signal input and output. That is, when the coverage signal and the transmission signal are transmitted in a serial manner from a front end module connected to the baseband data processing module 300, then the separation unit is provided to perform separation of the coverage signal and the transmission signal, after which a subsequent baseband data processing step is performed.

The high frequency 5G base station provided by the present embodiment may receive a serial signal composed of the coverage signal and the transmission signal input by the front end module by using the separation unit, and an application range of the high frequency 5G base station is thus improved.

For the high frequency 5G base station provided by the present disclosure, a received high frequency signal including a high frequency transmission signal and/or a high frequency coverage signal is converted using the signal processing module, wherein the high frequency transmission signal and the high frequency coverage signal are respectively converted into low frequency signals that are to be processed by the baseband data processing module. After that, the baseband data processing module performs baseband processing and signal format exchanging. Then, the signal processing module converts a low frequency coverage signal and a low frequency transmission signal both converted by the baseband data processing module into a high frequency coverage signal and a high frequency transmission signal and then transmit them. Since the high frequency 5G base station provided by the present disclosure is based on a modularization and Software Defined Radio (SDR) design philosophy, the high frequency 5G base station provided by the present disclosure can improve network performance, reduce network cost, enhance network expansion flexibility, reduce network management complexity, and realize a coverage function and a transmission function at the same time; and the baseband data processing module and the signal processing module may be configured as two separate hardware modules so that modular assembling can be achieved. In this way, flexible networking, rapid network building and simple network management and maintenance can be achieved as long as a working voltage is provided.

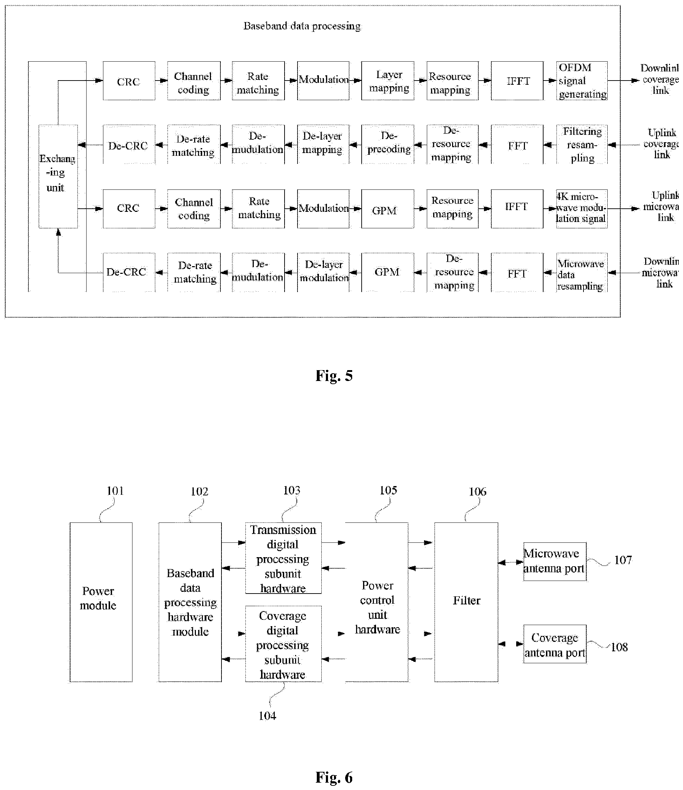

To better illustrate a baseband processing process provided in the above embodiment of the present disclosure, Fig. 5 schematically shows a baseband data processing process in a high frequency 5G base station signal processing method in Embodiment 4 of the present disclosure. The baseband data processing process as shown in Fig. 5 includes a baseband data processing process in which a signal is transmitted from a user to a core network and a baseband data processing process in which a signal is transmitted from the core network to the user.

### a) The baseband data processing process in which a signal is transmitted from the user to the core network

After an uplink baseband signal passes a filtering resampling module and a fast Fourier transform (FFT) module, user side data is separated. The signal, which is an orthogonal frequency division multiplexing (OFDM) modulation signal, is then subjected to resource de-mapping, de-precoding, layer de-mapping, demodulation, and rate de-matching, and is recovered as uplink traffic data. After the uplink traffic data is subjected to de-cyclic redundancy check (CRC) data verification, the verified uplink traffic data is transmitted to the exchanging unit for scheduling.

The exchanging unit schedules the traffic data from the user side to a downlink microwave link. The data is subjected to CRC check and then transmitted to a channel coding module, and it then goes through high-order modulation as a baseband signal via a rate matching module, a modulation module, a general purpose multiplexer (GPM) and a resource mapping module. The modulated signal passes an inverse fast Fourier transform (IFFT) module and is converted into IQ data which enters the downlink microwave link.

### b) The baseband data processing process in which a signal is transmitted from the core network to the user

After a downlink baseband signal passes a microwave data sampling module and a FFT module, core network side data is retained. The signal, which is a 4K high-order modulation signal, is then subjected to resource de-mapping, GPM, layer de-mapping, demodulation, and rate de-matching, and is recovered as downlink traffic data. After the downlink traffic data is subjected to de-CRC data verification, the verified downlink traffic data is transmitted to the exchanging unit for scheduling.

The exchanging unit schedules the traffic data from the core network side to a downlink coverage link. The data is subjected to CRC check, and then transmitted to the channel coding module, and it then goes through OFDM modulation as a baseband signal via the rate matching module, the modulation module, a layer mapping module and the resource mapping module. The modulated signal passes the inverse fast Fourier transform (IFFT) module and is converted into IQ data which enters the downlink coverage link.

Fig. 6 schematically shows a structure of a high frequency 5G base station in Embodiment 5 of the present disclosure. The high frequency 5G base station as shown in Fig. 6 includes a baseband data processing hardware module 102, a coverage digital processing subunit hardware 104, a transmission digital processing subunit hardware 103, a power control unit hardware 105, a power supply module 101, a filter 106 module, a microwave antenna port 107, and a coverage antenna port 108.

The system operation is divided into two processes which complete reception of data and transmission of data respectively.

In the reception process, a user signal of user equipment is received via an antenna at the coverage antenna port 108 as shown in Fig. 6. The received signal is filtered off an out-of-band useless signal and a stray signal by the filter 106 in Fig. 6. The filtered signal is then subjected to processes, including signal amplification and down-conversion and so on, at the power control unit hardware 105, and is processed and converted into an intermediate frequency signal. The intermediate frequency signal is subjected to an analog-to-digital conversion at the coverage digital processing subunit hardware 104 in Fig. 6, and is converted into an intermediate frequency digital signal. The intermediate frequency digital signal is then subjected to a digital down-conversion and is converted to a low frequency signal. The low frequency digital signal is subjected to signal demodulation processing at the baseband data processing hardware module 102 and is demodulated into a baseband signal. At the meanwhile, the baseband signal is subjected to re-modulation at the baseband data processing hardware module 102 and then transmitted to the transmission digital processing subunit hardware 103 so as to go through the digital processing including digital up-conversion, filtering and peak clipping and to be converted into an intermediate frequency signal. The intermediate frequency signal is subjected to a second frequency conversion and power amplification performed by a common radio frequency link and a power amplifier in the power control unit hardware 105 in Fig. 6 and is converted into a microwave signal. Then, the microwave signal is filtered off the stray signal by the filter 106. Finally, the signal is transmitted to the core network via an antenna connected to the microwave antenna port 107 in Fig. 6.

In the transmission process, traffic data of the core network is received via the microwave antenna port 107 in Fig. 6. The received signal is filtered off an out-of-band useless signal and a stray signal by the filter 106 in Fig. 6. The filtered signal is then subjected to processes, including signal amplification and down-conversion and so on, at the power control unit hardware 105, and is processed and converted into an intermediate frequency signal. The intermediate frequency signal is subjected to an analog-to-digital conversion at a transmission link digital processing module 103 in Fig. 6, and is converted into an intermediate frequency digital signal. Then, the intermediate frequency digital signal is subjected to a digital down-conversion and is converted to a low frequency signal. The low frequency digital signal is subjected to signal demodulation processing at the baseband data processing hardware module 102 and is demodulated into a baseband signal. At the meanwhile, the baseband signal is subjected to re-modulation at the baseband data processing hardware module 102 and is transmitted to the coverage digital processing subunit hardware 104 so as to go through the digital processing including digital up-conversion, filtering and peak clipping and to be converted into an intermediate frequency signal. The intermediate frequency signal is subjected to a second frequency conversion and power amplification performed by the common radio frequency link and the power amplifier in the power control unit hardware 105 in Fig. 6 and is converted into a microwave signal. The microwave signal is filtered off the stray signal by the filter 106. Finally, the signal is transmitted to the user via the antenna connected to the coverage antenna port 108 in Fig. 6.

In the embodiment, through those common hardware, after a modularization design is performed by means of software, baseband processing to the coverage signal and to the transmission signal are performed concurrently, so that the high frequency 5G base station is simple in structure, flexible in networking and stable and reliable.

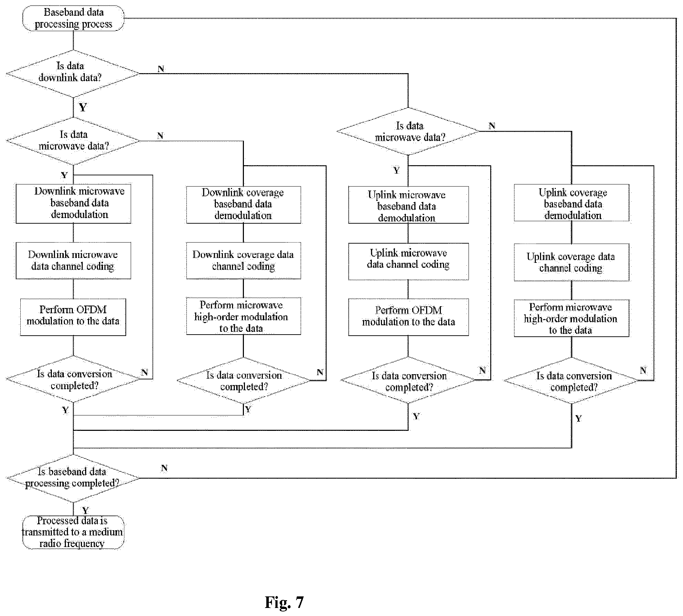

In an embodiment, when baseband data processing is performed to a signal, it is first determined whether the signal is a downlink signal, and then a subsequent baseband data processing process is performed. Fig. 7 schematically shows a baseband data processing process in a high frequency 5G base station signal processing method in Embodiment 6 of the present disclosure, and the baseband data processing process includes the following step (1) to step (6).
(1) It is determined whether data received from a port is an uplink signal or a downlink signal (an uplink process is defined as a process in which a user signal is received through a coverage link and subjected to signal conversion over a baseband, and it is then transmitted to the core network via a transmission link; and a downlink process is defined as a process in which a core network signal is received via the transmission link and subjected to signal conversion over the baseband, and it is then transmitted to the user via the coverage link), and the determination is made according to different placement positions or flag bits of the data, so that different signals respectively enter respective processes.
(2) A type of the received signal is identified so as to distinguish whether it is a coverage signal or a transmission signal (including a microwave signal), and signals enter respective process according to different signal types.
(3) Demodulation is performed to baseband signals that are transmitted, i.e., microwave demodulation being performed to the microwave signal, and coverage signal demodulation being performed to the coverage signal.
(4) Channel coding is performed to the demodulated signal, and resource is allocated as required.
(5) Conversion and encoding is performed to the signal, i.e., OFDM modulation being performed to a signal transmitted from the transmission link so as to convert the signal into a signal format of the coverage link, and high-order microwave modulation being performed to a signal transmitted from the coverage link so as to convert the signal into a signal format of the transmission link.
(6) After conversion of the signal, the signal is conveyed to an intermediate radio frequency module via the port, and finally are radiated out as an analog signal via an antenna.

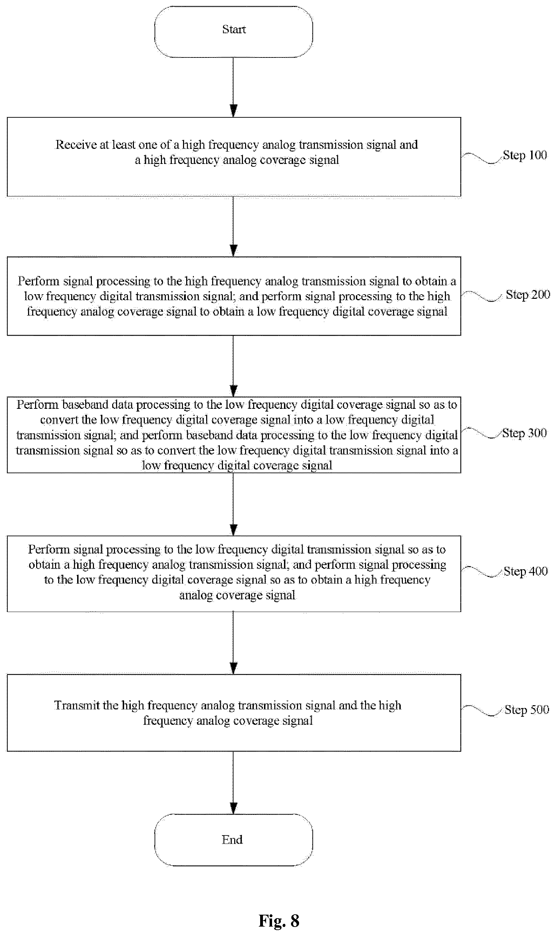

Fig. 8 schematically shows a flowchart of a high frequency 5G base station signal processing method in Embodiment 7 of the present disclosure. The high frequency 5G base station signal processing method in Embodiment 7 of the present disclosure includes step 100, step 200, step 300, step 400 and step 500.

At step 100, at least one of a high frequency analog transmission signal and a high frequency analog coverage signal is received.

In an embodiment, the high frequency analog transmission signal is an interaction signal between the high frequency 5G base station and the core network side, and the high frequency analog transmission signal includes a microwave signal, an optical fiber signal and the like. The high frequency analog coverage signal is an interaction signal between the high frequency 5G base station and the user side. In practice, the high frequency signal transceiver module includes two ports, i.e., a coverage antenna port used for receiving and transmitting the high frequency analog coverage signal, which is configured to connect to a coverage antenna, and a microwave antenna port used for receiving and transmitting the high frequency analog transmission signal, which is configured to connect to a microwave antenna.

At step 200, signal processing is performed to the high frequency analog transmission signal to obtain a low frequency digital transmission signal; and signal processing is performed to the high frequency analog coverage signal to obtain a low frequency digital coverage signal.

In an embodiment, before baseband data processing is performed to the coverage signal and the transmission signal, a high frequency analog signal has to be converted into a low frequency digital signal. Based on that the coverage signal and the transmission signal have proximate frequency bands, signal processing including digital-to-analog conversion and down-conversion to the transmission signal and to the coverage signal can be enabled concurrently using one hardware module.

At step 300, baseband data processing is performed to the low frequency digital coverage signal so as to convert it into a low frequency digital transmission signal; and baseband data processing is performed to the low frequency digital transmission signal so as to convert it into a low frequency digital coverage signal.

In an embodiment, through the baseband data processing, a coverage signal that is transmitted from the user side is converted into a transmission signal that may be transmitted to the core network side, and a transmission signal that is transmitted from the core network side is converted into a coverage signal that may be transmitted to the user side, thereby completing the baseband data processing.

At step 400, signal processing is performed to the low frequency digital transmission signal so as to obtain a high frequency analog transmission signal; and signal processing is performed to the low frequency digital coverage signal so as to obtain a high frequency analog coverage signal.

In an embodiment, the transmission signal and the coverage signal which are subjected to the baseband data processing are further subjected to analog-to-digital conversion and up-conversion processing so that a low frequency digital signal is converted into a high frequency analog signal.

At step 500, the high frequency analog transmission signal and the high frequency analog coverage signal are transmitted.

In an embodiment, the resulted high frequency analog transmission signal is transmitted to the core network via a transmission port, and the resulted high frequency analog coverage signal is transmitted to the user via a coverage port.

In the method provided in the present embodiment, based on that a transmission signal and a coverage signal of the high frequency 5G base station have proximate frequency bands, a common signal processing module and a common baseband data processing module are used to process the high frequency transmission signal and the high frequency coverage signal in an concurrent manner, so that the high frequency 5G base station is simple in structure, flexible in networking, and stable and reliable.

All or some steps of various methods in the above embodiments may be implemented by related hardware instructed by a computer program. The computer program may be stored in a computer-readable storage medium, and the storage medium may include read only memory (ROM), random access memory (RAM), magnetic disk or optical disk, and the like.

## Claims

1. A high frequency 5G base station applicable to a high frequency 5G mobile network, comprising: a high frequency signal transceiver module (100), a signal processing module (200) and a baseband data processing module (300), wherein:
the high frequency signal transceiver module (100) is configured to transmit at least one of a high frequency analog transmission signal and a high frequency analog coverage signal that are received to the signal processing module (200), and emit at least one of a high frequency analog transmission signal and a high frequency analog coverage signal that are fed back by the signal processing module (200), wherein the high frequency analog transmission signal is an interaction signal between the high frequency 5G base station and a core network side, and the high frequency analog coverage signal is an interaction signal between the high frequency 5G base station and a user side;
the signal processing module (200) is configured to process the received high frequency analog transmission signal to obtain a low frequency digital transmission signal and transmit the low frequency digital transmission signal that is obtained by processing to the baseband data processing module (300), and to process the received high frequency analog coverage signal to obtain a low frequency digital coverage signal and transmit the low frequency digital coverage signal that is obtained by processing to the baseband data processing module (300); and to process a low frequency digital transmission signal that is transmitted from the baseband data processing module (300) to obtain a high frequency analog transmission signal and transmit the high frequency analog transmission signal that is obtained by processing to the high frequency signal transceiver module (100), and to process a low frequency digital coverage signal that is transmitted from the baseband data processing module (300) to obtain a high frequency analog coverage signal and transmit the high frequency analog coverage signal that is obtained by processing to the high frequency signal transceiver module (100); and
the baseband data processing module (300) is configured to convert the low frequency digital coverage signal that is transmitted from the signal processing module (200) into the low frequency digital transmission signal and transmit the low frequency digital transmission signal that is obtained by conversion to the signal processing module (200); and to convert the low frequency digital transmission signal that is transmitted from the signal processing module (200) into the low frequency digital coverage signal and transmit the low frequency digital coverage signal that is obtained by conversion to the signal processing module (200);
wherein the baseband data processing module (300) comprises a demodulation unit (310), a verification unit (320), an exchanging unit (330) and a modulation unit (340), wherein:
the demodulation unit (310) is configured to demodulate the received low frequency digital coverage signal to obtain user data to be exchanged and transmit the user data to be exchanged to the verification unit (320), and to demodulate the received low frequency digital transmission signal to obtain core network data to be exchanged and transmit the core network data to be exchanged to the verification unit (320);
the verification unit (320) is configured to de-verify the user data to be exchanged and the core network data to be exchanged that are received and transmit the de-verified user data to be exchanged and the de-verified core network data to be exchanged to the exchanging unit (330), and wherein the verification unit (320) is configured to verify user exchange data and core network exchange data that are transmitted from the exchanging unit (330) and transmit the verified user exchange data and the verified core network exchange data to the modulation unit (340);
the exchanging unit (330) is configured to convert the received user data to be exchanged into core network exchange data and transmit the core network exchange data to the verification unit (320), and to convert the received core network data to be exchanged into user exchange data and transmit the user exchange data to the verification unit (320); and
the modulation unit (340) is configured to modulate the received core network exchange data into the low frequency digital transmission signal and transmit the low frequency digital transmission signal to the signal processing module (200), and wherein the modulation unit (340) is configured to modulate the received user exchange data into the low frequency digital coverage signal and transmit the low frequency digital coverage signal to the signal processing module (200).

2. The high frequency 5G base station according to claim 1, wherein the signal processing module (200) comprises a filtering unit (210), a power control unit (220), and a digital processing unit (230), wherein:
the filtering unit (210) is configured to filter at least one of the high frequency analog transmission signal and the high frequency analog coverage signal that are received and transmit at least one of the filtered high frequency analog transmission signal and the filtered high frequency analog coverage signal to the power control unit (220), and to filter at least one of a high frequency analog transmission signal and a high frequency analog coverage signal that are fed back by the power control unit (220) and transmit at least one of the filtered high frequency analog transmission signal and the filtered high frequency analog coverage signal to the high frequency signal transceiver module (100);
the power control unit (220) is configured to convert the received high frequency analog coverage signal into an intermediate frequency analog coverage signal and transmit the intermediate frequency analog coverage signal that is obtained by conversion to the digital processing unit (230), and to convert the received high frequency analog transmission signal into an intermediate frequency analog transmission signal and transmit the intermediate frequency analog transmission signal that is obtained by conversion to the digital processing unit (230), and wherein the power control unit (220) is configured to convert an intermediate frequency analog coverage signal that is transmitted from the digital processing unit (230) into a high frequency analog coverage signal and transmit the high frequency analog coverage signal that is obtained by conversion to the filtering unit (210), and to convert an intermediate frequency analog transmission signal that is transmitted from the digital processing unit (230) into a high frequency analog transmission signal and transmit the high frequency analog transmission signal to the filtering unit (210); and
the digital processing unit (230) is configured to convert the received intermediate frequency analog coverage signal into a low frequency digital coverage signal and transmit the low frequency digital coverage signal that is obtained by conversion to the baseband data processing module (300), and to convert the received intermediate frequency analog transmission signal into a low frequency digital transmission signal and transmit the low frequency digital transmission signal that is obtained by conversion to the baseband data processing module (300), and wherein the digital processing unit (230) is configured to convert the low frequency digital coverage signal that is transmitted from the baseband data processing module (300) into an intermediate frequency analog coverage signal and transmit the intermediate frequency analog coverage signal that is obtained by conversion to the power control unit (220), and to convert the low frequency digital transmission signal that is transmitted from the baseband data processing module (300) into an intermediate frequency analog transmission signal and transmit the intermediate frequency analog transmission signal that is obtained by conversion to the power control unit (220).

3. The high frequency 5G base station according to claim 2, wherein the power control unit (220) comprises a receiving subunit and a transmitting subunit, wherein:
the receiving subunit is configured to perform signal amplification and down-conversion to the high frequency analog coverage signal that is transmitted from the filtering unit (210) to obtain the intermediate frequency analog coverage signal and transmit the intermediate frequency analog coverage signal to the digital processing unit (230), and wherein the receiving subunit is further configured to perform signal amplification and down-conversion to the high frequency analog transmission signal that is transmitted from the filtering unit (210) to obtain the intermediate frequency analog transmission signal and transmit the intermediate frequency analog transmission signal to the digital processing unit (230), and
the transmitting subunit is configured to perform power amplification and up-conversion to the intermediate frequency analog coverage signal that is transmitted from the digital processing unit (230) to obtain the high frequency analog coverage signal and transmit the high frequency analog coverage signal to the filtering unit (210), and wherein the transmitting subunit is further configured to perform power amplification and up-conversion to the intermediate frequency analog transmission signal that is transmitted from the digital processing unit (230) to obtain the high frequency analog transmission signal and transmit the high frequency analog transmission signal to the filtering unit (210).

4. The high frequency 5G base station according to claim 2, wherein the digital processing unit (230) comprises a coverage digital processing subunit and a transmission digital processing subunit, wherein:
the coverage digital processing subunit is configured to perform analog-to-digital conversion and down-conversion to the received intermediate frequency analog coverage signal to obtain the low frequency digital coverage signal and transmit the low frequency digital coverage signal to the baseband data processing module (300), and wherein the coverage digital processing subunit is configured to perform up-conversion, filtering and peak clipping processing to the low frequency digital coverage signal that is transmitted from the baseband data processing module (300) to obtain the intermediate frequency analog coverage signal and transmit the intermediate frequency analog coverage signal to a transmitting subunit; and
the transmission digital processing subunit is configured to perform analog-to-digital conversion and down-conversion to the received intermediate frequency analog transmission signal to obtain the low frequency digital transmission signal and transmit the low frequency digital transmission signal to the baseband data processing module (300), and wherein the transmission digital processing subunit is configured to perform up-conversion, filtering and peak clipping processing to the low frequency digital transmission signal that is transmitted from the baseband data processing module (300) to obtain the intermediate frequency analog transmission signal and transmit the intermediate frequency analog transmission signal to the transmitting subunit.

5. The high frequency 5G base station according to claim 1, wherein the demodulation unit (310) comprises a coverage demodulation subunit and a transmission demodulation subunit, wherein:
the coverage demodulation subunit is configured to perform resource de-mapping, de-precoding, layer de-mapping, demodulation, rate de-matching to the low frequency digital coverage signal that is received so as to obtain the user data to be exchanged, and transmit the user data to be exchanged to the verification unit (320); and
the transmission demodulation subunit is configured to perform resource de-mapping, general purpose multiplexing, layer de-mapping, demodulation, rate de-matching to the low frequency digital transmission signal that is received so as to obtain the core network data to be exchanged, and transmit the core network data to be exchanged to the verification unit (320).

6. The high frequency 5G base station according to claim 1, wherein the modulation unit (340) comprises a transmission modulation subunit and a coverage modulation subunit, wherein:
the transmission modulation subunit is configured to perform channel coding, rate matching, modulation, general purpose multiplexing, resource mapping, fast Fourier transform and high-order modulation to the core network exchange data that is received so as to modulate the core network exchange data that is received into the low frequency digital transmission signal, and transmit the low frequency digital transmission signal to the signal processing module (200); and
the coverage modulation subunit is configured to perform channel coding, rate matching, modulation, layer mapping, resource mapping, fast Fourier transform and orthogonal frequency division multiplexing to the user exchange data that is received so as to modulate the user exchange data that is received into the low frequency digital coverage signal, and transmit the low frequency digital coverage signal to the signal processing module (200).

7. The high frequency 5G base station according to claim 1, wherein the baseband data processing module (300) further comprises:
a separation unit, configured to separate a low frequency digital coverage signal or a low frequency digital transmission signal from a serial signal that is received and transmit the low frequency digital coverage signal or the low frequency digital transmission signal to the demodulation unit (310).

8. The high frequency 5G base station according to claim 7, wherein the separation unit comprises a coverage separation subunit and a transmission separation subunit, wherein:
the coverage separation subunit is configured to separate the low frequency digital coverage signal from the serial signal that is received by means of filtering resampling and fast Fourier transform and transmit the low frequency digital coverage signal to the demodulation unit (310); and
the transmission separation subunit is configured to separate the low frequency digital transmission signal from the serial signal that is received by means of microwave data sampling and fast Fourier transform and transmit the low frequency digital transmission signal to the demodulation unit (310).

9. A high frequency 5G base station signal processing method, comprising:
receiving, by a high frequency signal transceiver module (100) of a high frequency 5G base station, at least one of a high frequency analog transmission signal and a high frequency analog coverage signal, wherein the high frequency analog transmission signal is an interaction signal between a high frequency 5G base station and a core network side, and the high frequency analog coverage signal is an interaction signal between the high frequency 5G base station and a user side;
performing, by a signal processing module (200) of the high frequency 5G base station, signal processing to the high frequency analog transmission signal to obtain a low frequency digital transmission signal, and performing signal processing to the high frequency analog coverage signal to obtain a low frequency digital coverage signal;
performing, by a baseband data processing module (300) of the high frequency 5G base station, baseband data processing to the low frequency digital coverage signal so as to convert the low frequency digital coverage signal into a low frequency digital transmission signal, and performing baseband data processing to the low frequency digital transmission signal so as to convert the low frequency digital transmission signal into a low frequency digital coverage signal; wherein the baseband data processing module (300) comprises a demodulation unit (310), a verification unit (320), an exchanging unit (330) and a modulation unit (340);
performing, by the signal processing module (200), signal processing to the low frequency digital transmission signal so as to obtain a high frequency analog transmission signal, and performing signal processing to the low frequency digital coverage signal so as to obtain a high frequency analog coverage signal; and
emitting, by the high frequency signal transceiver module (100), the high frequency analog transmission signal and the high frequency analog coverage signal;
wherein performing, by a baseband data processing module (300), baseband data processing to the low frequency digital coverage signal and performing baseband data processing to the low frequency digital transmission signal comprises:
demodulating, by the demodulation unit (310), the received low frequency digital coverage signal to obtain user data to be exchanged, and transmitting the user data to be exchanged to the verification unit (320); and demodulating, by the demodulation unit (310), the received low frequency digital transmission signal to obtain core network data to be exchanged, and transmitting the core network data to be exchanged to the verification unit (320);
de-verifying, by the verification unit (320), the user data to be exchanged and the core network data to be exchanged that are received, and transmitting the de-verified user data to be exchanged and the de-verified core network data to be exchanged to the exchanging unit (330); and verifying, by the verification unit (320), user exchange data and core network exchange data that are transmitted from the exchanging unit (330), and transmitting the verified user exchange data and the verified core network exchange data to the modulation unit (340);
converting, by the exchanging unit (330), the received user data to be exchanged into core network exchange data and transmitting the core network exchange data to the verification unit (320); and converting, by the exchanging unit (330), the received core network data to be exchanged into user exchange data and transmitting the user exchange data to the verification unit (320); and
modulating, by the modulation unit (340), the received core network exchange data into the low frequency digital transmission signal and transmitting the low frequency digital transmission signal to the signal processing module (200); and modulating, by the modulation unit (340), the received user exchange data into the low frequency digital coverage signal and transmitting the low frequency digital coverage signal to the signal processing module (200).

## Patentansprüche

1. Eine Hochfrequenz-5G-Basisstation , die für ein Hochfrequenz-5G-Mobilfunknetz anwendbar ist und Folgendes umfasst: ein Hochfrequenzsignal-Sende-/Empfangsmodul (100), ein Signalverarbeitungsmodul (200) und ein Basisband-Datenverarbeitungsmodul (300), wobei
das Hochfrequenzsignal-Sende-/Empfangsmodul (100) so konfiguriert ist, dass es ein analoges Hochfrequenz-Übertragungssignal und/oder ein analoges Hochfrequenz-Abdeckungssignal, die empfangen werden, an das Signalverarbeitungsmodul (200) überträgt und ein analoges Hochfrequenz-Übertragungssignal und/oder ein analoges Hochfrequenz-Abdeckungssignal, die von dem Signalverarbeitungsmodul (200) zurückgeführt werden, aussendet, wobei das analoge Hochfrequenz-Übertragungssignal ein Interaktionssignal zwischen der 5G-Hochfrequenz-Basisstation und einer Kernnetzseite ist, und das analoge Hochfrequenz-Abdeckungssignal ein Interaktionssignal zwischen der 5G-Hochfrequenz-Basisstation und einer Benutzerseite ist;
das Signalverarbeitungsmodul (200) so konfiguriert ist, dass es das empfangene analoge Hochfrequenzübertragungssignal verarbeitet, um ein digitales Niederfrequenzübertragungssignal zu erhalten, und das durch die Verarbeitung erhaltene digitale Niederfrequenzübertragungssignal an das Basisbanddatenverarbeitungsmodul (300) überträgt, und das empfangene analoge Hochfrequenzübertragungssignal verarbeitet, um ein digitales Niederfrequenzübertragungssignal zu erhalten und das durch die Verarbeitung erhaltene digitale Niederfrequenzübertragungssignal an das Basisbanddatenverarbeitungsmodul (300) zu übertragen; und ein niederfrequentes digitales Übertragungssignal zu verarbeiten, das von dem Basisband-Datenverarbeitungsmodul (300) übertragen wird, um ein hochfrequentes analoges Übertragungssignal zu erhalten, und das hochfrequente analoge Übertragungssignal, das durch die Verarbeitung erhalten wird, an das Hochfrequenzsignal-Sende-/Empfangsmodul (100) zu übertragen, und ein niederfrequentes digitales Versorgungssignal zu verarbeiten, das von dem Basisband-Datenverarbeitungsmodul (300) übertragen wird, um ein hochfrequentes analoges Versorgungssignal zu erhalten, und das hochfrequente analoge Versorgungssignal, das durch die Verarbeitung erhalten wird, an das Hochfrequenzsignal-Sende-/Empfangsmodul (100) zu übertragen; und
das Basisband-Datenverarbeitungsmodul (300) so konfiguriert ist, dass es das niederfrequente digitale Übertragungssignal, das von dem Signalverarbeitungsmodul (200) übertragen wird, in das niederfrequente digitale Übertragungssignal umwandelt und das niederfrequente digitale Übertragungssignal, das durch Umwandlung erhalten wird, an das Signalverarbeitungsmodul (200) überträgt; und dass es das niederfrequente digitale Übertragungssignal, das von dem Signalverarbeitungsmodul (200) übertragen wird, in das niederfrequente digitale Übertragungssignal umwandelt und das niederfrequente digitale Übertragungssignal, das durch Umwandlung erhalten wird, an das Signalverarbeitungsmodul (200) überträgt;
wobei das Basisband-Datenverarbeitungsmodul (300) eine Demodulationseinheit (310), eine Verifikationseinheit (320), eine Austauscheinheit (330) und eine Modulationseinheit (340) umfasst, wobei:
die Demodulationseinheit (310) so konfiguriert ist, dass sie das empfangene niederfrequente digitale Übertragungssignal demoduliert, um auszutauschende Benutzerdaten zu erhalten und die auszutauschenden Benutzerdaten an die Verifizierungseinheit (320) zu übertragen, und dass sie das empfangene niederfrequente digitale Übertragungssignal demoduliert, um auszutauschende Kernnetzdaten zu erhalten und die auszutauschenden Kernnetzdaten an die Verifizierungseinheit (320) zu übertragen;
die Verifizierungseinheit (320) so konfiguriert ist, dass sie die auszutauschenden Benutzerdaten und die auszutauschenden Kernnetzdaten, die empfangen werden, de-verifiziert und die de-verifizierten auszutauschenden Benutzerdaten und die de-verifizierten auszutauschenden Kernnetzdaten an die Austauscheinheit (330) überträgt, und wobei die Verifizierungseinheit (320) so konfiguriert ist, dass sie Benutzeraustauschdaten und Kernnetzaustauschdaten, die von der Austauscheinheit (330) übertragen werden, verifiziert und die verifizierten Benutzeraustauschdaten und die verifizierten Kernnetzaustauschdaten an die Modulationseinheit (340) überträgt;
die Austauscheinheit (330) so konfiguriert ist, dass sie die empfangenen auszutauschenden Benutzerdaten in Kernnetz-Austauschdaten umwandelt und die Kernnetz-Austauschdaten an die Verifizierungseinheit (320) überträgt, und dass sie die empfangenen auszutauschenden Kernnetzdaten in Benutzeraustauschdaten umwandelt und die Benutzeraustauschdaten an die Verifizierungseinheit (320) überträgt; und
die Modulationseinheit (340) so konfiguriert ist, dass sie die empfangenen Kernnetz-Vermittlungsdaten in das niederfrequente digitale Übertragungssignal moduliert und das niederfrequente digitale Übertragungssignal an das Signalverarbeitungsmodul (200) überträgt, und wobei die Modulationseinheit (340) so konfiguriert ist, dass sie die empfangenen Benutzer-Vermittlungsdaten in das niederfrequente digitale Versorgungssignal moduliert und das niederfrequente digitale Versorgungssignal an das Signalverarbeitungsmodul (200) überträgt.

2. Hochfrequenz-5G-Basisstation nach Anspruch 1, wobei das Signalverarbeitungsmodul (200) eine Filtereinheit (210), eine Leistungssteuereinheit (220) und eine digitale Verarbeitungseinheit (230) umfasst, wobei:
die Filtereinheit (210) so konfiguriert ist, dass sie mindestens eines von dem analogen Hochfrequenzübertragungssignal und dem analogen Hochfrequenzabdeckungssignal, die empfangen werden, filtert und mindestens eines von dem gefilterten analogen Hochfrequenzübertragungssignal und dem gefilterten analogen Hochfrequenzabdeckungssignal an die Leistungssteuereinheit (220) überträgt, und zum Filtern mindestens eines von einem hochfrequenten analogen Übertragungssignal und einem hochfrequenten analogen Bedeckungssignal, die von der Leistungssteuereinheit (220) zurückgeführt werden, und zum Übertragen mindestens eines von dem gefilterten hochfrequenten analogen Übertragungssignal und dem gefilterten hochfrequenten analogen Bedeckungssignal an das Hochfrequenzsignal-Sende-/Empfangsmodul (100);
die Leistungssteuereinheit (220) so konfiguriert ist, dass sie das empfangene analoge Hochfrequenz-Versorgungssignal in ein analoges Zwischenfrequenz-Versorgungssignal umwandelt und das durch Umwandlung erhaltene analoge Zwischenfrequenz-Versorgungssignal an die digitale Verarbeitungseinheit (230) überträgt, und dass sie das empfangene analoge Hochfrequenz-Übertragungssignal in ein analoges Zwischenfrequenz-Übertragungssignal umwandelt und das durch Umwandlung erhaltene analoge Zwischenfrequenz-Übertragungssignal an die digitale Verarbeitungseinheit (230) überträgt und wobei die Leistungssteuereinheit (220) so konfiguriert ist, dass sie ein von der digitalen Verarbeitungseinheit (230) übertragenes analoges Zwischenfrequenz-Übertragungssignal in ein analoges Hochfrequenz-Übertragungssignal umwandelt und das durch Umwandlung erhaltene analoge Hochfrequenz-Übertragungssignal an die Filtereinheit (210) überträgt, und dass sie ein von der digitalen Verarbeitungseinheit (230) übertragenes analoges Zwischenfrequenz-Übertragungssignal in ein analoges Hochfrequenz-Übertragungssignal umwandelt und das analoge Hochfrequenz-Übertragungssignal an die Filtereinheit (210) überträgt; und
die digitale Verarbeitungseinheit (230) konfiguriert ist, um das empfangene analoge Zwischenfrequenz-Versorgungssignal in ein digitales Niederfrequenz-Versorgungssignal umzuwandeln und das durch Umwandlung erhaltene digitale Niederfrequenz-Versorgungssignal an das Basisband-Datenverarbeitungsmodul (300) zu übertragen, und um das empfangene analoge Zwischenfrequenz-Übertragungssignal in ein digitales Niederfrequenz-Übertragungssignal umzuwandeln und das durch Umwandlung erhaltene digitale Niederfrequenz-Übertragungssignal an das Basisband-Datenverarbeitungsmodul (300) zu übertragen und wobei die digitale Verarbeitungseinheit (230) so konfiguriert ist, dass sie das niederfrequente digitale Übertragungssignal, das von dem Basisband-Datenverarbeitungsmodul (300) übertragen wird, in ein analoges Zwischenfrequenz-Übertragungssignal umwandelt und das analoge Zwischenfrequenz-Übertragungssignal, das durch Umwandlung erhalten wird, an die Leistungssteuereinheit (220) überträgt, und dass sie das niederfrequente digitale Übertragungssignal, das von dem Basisband-Datenverarbeitungsmodul (300) übertragen wird, in ein analoges Zwischenfrequenz-Übertragungssignal umwandelt und das analoge Zwischenfrequenz-Übertragungssignal, das durch Umwandlung erhalten wird, an die Leistungssteuereinheit (220) überträgt.

3. Hochfrequenz-5G-Basisstation nach Anspruch 2, wobei die Leistungssteuereinheit (220) eine Empfangsuntereinheit und eine Sendeuntereinheit umfasst, wobei:
die Empfangsuntereinheit so konfiguriert ist, dass sie eine Signalverstärkung und eine Abwärtsumwandlung des analogen Hochfrequenzübertragungssignals durchführt, das von der Filtereinheit (210) übertragen wird, um das analoge Zwischenfrequenzübertragungssignal zu erhalten und das analoge Zwischenfrequenzübertragungssignal an die digitale Verarbeitungseinheit (230) zu übertragen, und wobei die Empfangsuntereinheit ferner so konfiguriert ist, dass sie eine Signalverstärkung und eine Abwärtsumwandlung des analogen Hochfrequenzübertragungssignals durchführt, das von der Filtereinheit (210) übertragen wird, um das analoge Zwischenfrequenzübertragungssignal zu erhalten und das analoge Zwischenfrequenzübertragungssignal an die digitale Verarbeitungseinheit (230) zu übertragen, und
die übertragende Untereinheit so konfiguriert ist, dass sie eine Leistungsverstärkung und eine Aufwärtswandlung des analogen Zwischenfrequenz-Abdeckungssignals durchführt, das von der digitalen Verarbeitungseinheit (230) übertragen wird, um das analoge Hochfrequenz-Abdeckungssignal zu erhalten und das analoge Hochfrequenz-Abdeckungssignal an die Filtereinheit (210) zu übertragen, und wobei die übertragende Untereinheit ferner so konfiguriert ist, dass sie eine Leistungsverstärkung und eine Aufwärtswandlung des analogen Zwischenfrequenz-Übertragungssignals durchführt, das von der digitalen Verarbeitungseinheit (230) übertragen wird, um das analoge Hochfrequenz-Übertragungssignal zu erhalten und das analoge Hochfrequenz-Übertragungssignal an die Filtereinheit (210) zu übertragen.

4. Hochfrequenz-5G-Basisstation nach Anspruch 2, wobei die digitale Verarbeitungseinheit (230) eine digitale Untereinheit für die Abdeckung und eine digitale Untereinheit für die Übertragung umfasst, wobei:
die digitale Versorgungsuntereinheit so konfiguriert ist, dass sie eine Analog-Digital-Wandlung und eine Abwärtswandlung des empfangenen analogen Zwischenfrequenz-Versorgungssignals durchführt, um das digitale Niederfrequenz-Versorgungssignal zu erhalten und das digitale Niederfrequenz-Versorgungssignal an das Basisband-Datenverarbeitungsmodul (300) zu übertragen, und wobei die digitale Versorgungsuntereinheit so konfiguriert ist, dass sie eine Aufwärtswandlung, eine Filterung und eine Spitzenbegrenzungsverarbeitung des digitalen Niederfrequenz-Versorgungssignals durchführt, das von dem Basisband-Datenverarbeitungsmodul (300) übertragen wird, um das analoge Zwischenfrequenz-Versorgungssignal zu erhalten und das analoge Zwischenfrequenz-Versorgungssignal an eine Sendeuntereinheit zu übertragen; und
die digitale Übertragungs-Verarbeitungsuntereinheit so konfiguriert ist, dass sie eine Analog-Digital-Wandlung und eine Abwärtswandlung des empfangenen analogen Zwischenfrequenz-Übertragungssignals durchführt, um das niederfrequente digitale Übertragungssignal zu erhalten und das niederfrequente digitale Übertragungssignal an das Basisband-Datenverarbeitungsmodul (300) zu übertragen, und wobei die digitale Übertragungs-Verarbeitungsuntereinheit so konfiguriert ist, dass sie eine Aufwärtswandlung, eine Filterung und eine Spitzenwertbegrenzungsverarbeitung des niederfrequenten digitalen Übertragungssignals durchführt, das von dem Basisband-Datenverarbeitungsmodul (300) übertragen wird, um das analoge Zwischenfrequenz-Übertragungssignal zu erhalten und das analoge Zwischenfrequenz-Übertragungssignal an die Übertragungsuntereinheit zu übertragen.

5. Hochfrequenz-5G-Basisstation nach Anspruch 1, wobei die Demodulationseinheit (310) eine Abdeckungsdemodulationsuntereinheit und eine Übertragungsdemodulationsuntereinheit umfasst, wobei:
die Abdeckungs-Demodulations-Untereinheit so konfiguriert ist, dass sie Ressourcen-Demapping, De-Precoding, Layer-Demapping, Demodulation, Raten-Dematching an dem digitalen Niederfrequenz-Abdeckungssignal durchführt, das empfangen wird, um die auszutauschenden Benutzerdaten zu erhalten, und die auszutauschenden Benutzerdaten an die Verifizierungseinheit (320) überträgt; und
die Übertragungsdemodulationsuntereinheit so konfiguriert ist, dass sie Ressourcen-Demapping, Allzweckmultiplexing, Layer-Demapping, Demodulation, Raten-Dematching an dem digitalen Niederfrequenzübertragungssignal durchführt, das empfangen wird, um die auszutauschenden Kernnetzdaten zu erhalten, und die auszutauschenden Kernnetzdaten an die Verifizierungseinheit (320) überträgt.

6. Hochfrequenz-5G-Basisstation nach Anspruch 1, wobei die Modulationseinheit (340) eine Übertragungsmodulationsuntereinheit und eine Abdeckungsmodulationsuntereinheit umfasst, wobei:
die Übertragungsmodulationsuntereinheit so konfiguriert ist, dass sie Kanalcodierung, Ratenanpassung, Modulation, Allzweckmultiplexing, Ressourcenzuordnung, schnelle Fourier-Transformation und Modulation höherer Ordnung an den empfangenen Kernnetz-Austauschdaten durchführt, um die empfangenen Kernnetz-Austauschdaten in das digitale Niederfrequenz-Übertragungssignal zu modulieren, und das digitale Niederfrequenz-Übertragungssignal an das Signalverarbeitungsmodul (200) überträgt; und
die Abdeckungsmodulationsuntereinheit so konfiguriert ist, dass sie Kanalcodierung, Ratenanpassung, Modulation, Ebenenabbildung, Ressourcenabbildung, schnelle Fourier-Transformation und orthogonales Frequenzmultiplexing an den empfangenen Benutzeraustauschdaten durchführt, um die empfangenen Benutzeraustauschdaten in das digitale Niederfrequenz-Abdeckungssignal zu modulieren, und das digitale Niederfrequenz-Abdeckungssignal an das Signalverarbeitungsmodul (200) überträgt.

7. Die Hochfrequenz-5G-Basisstation nach Anspruch 1, wobei das Basisband-Datenverarbeitungsmodul (300) ferner umfasst:
eine Trenneinheit, die so konfiguriert ist, dass sie ein niederfrequentes digitales Übertragungssignal oder ein niederfrequentes digitales Übertragungssignal von einem empfangenen seriellen Signal trennt und das niederfrequente digitale Übertragungssignal oder das niederfrequente digitale Übertragungssignal an die Demodulationseinheit (310) überträgt.

8. Hochfrequenz-5G-Basisstation nach Anspruch 7, wobei die Trenneinheit eine Abdeckungstrennungsuntereinheit und eine Übertragungstrennungsuntereinheit umfasst, wobei:
die Bedeckungstrennungsuntereinheit so konfiguriert ist, dass sie das niederfrequente digitale Bedeckungssignal von dem seriellen Signal trennt, das mittels Filterungswiederabtastung und schneller Fouriertransformation empfangen wird, und das niederfrequente digitale Bedeckungssignal an die Demodulationseinheit (310) überträgt; und
die Übertragungstrennungs-Untereinheit so konfiguriert ist, dass sie das niederfrequente digitale Übertragungssignal von dem seriellen Signal trennt, das mittels Mikrowellen-Datenabtastung und schneller Fourier-Transformation empfangen wird, und das niederfrequente digitale Übertragungssignal an die Demodulationseinheit (310) überträgt.

9. Ein Hochfrequenz-SG-Basisstations-Signalverarbeitungsverfahren, das Folgendes umfasst:
Empfangen eines hochfrequenten analogen Übertragungssignals und/oder eines hochfrequenten analogen Abdeckungssignals durch ein Hochfrequenzsignal-Transceivermodul (100) einer Hochfrequenz-5G-Basisstation, wobei das hochfrequente analoge Übertragungssignal ein Interaktionssignal zwischen einer Hochfrequenz-5G-Basisstation und einer Kernnetzseite ist und das hochfrequente analoge Abdeckungssignal ein Interaktionssignal zwischen der Hochfrequenz-5G-Basisstation und einer Benutzerseite ist;
Durchführen einer Signalverarbeitung für die Hochfrequenz-5G-Basisstation durch ein Signalverarbeitungsmodul (200), einer Signalverarbeitung für das analoge Hochfrequenz-Übertragungssignal, um ein digitales Niederfrequenz-Übertragungssignal zu erhalten, und Durchführen einer Signalverarbeitung für das analoge Hochfrequenz-Abdeckungssignal, um ein digitales Niederfrequenz-Abdeckungssignal zu erhalten;
Durchführen einer Basisband-Datenverarbeitung an dem digitalen Niederfrequenz-Abdeckungssignal durch ein Basisband-Datenverarbeitungsmodul (300) der Hochfrequenz-5G-Basisstation, um das digitale Niederfrequenz-Abdeckungssignal in ein digitales Niederfrequenz-Übertragungssignal umzuwandeln, und Durchführen einer Basisband-Datenverarbeitung an dem digitalen Niederfrequenz-Übertragungssignal, um das digitale Niederfrequenz-Übertragungssignal in ein digitales Niederfrequenz-Abdeckungssignal umzuwandeln; wobei das Basisband-Datenverarbeitungsmodul (300) eine Demodulationseinheit (310), eine Verifizierungseinheit (320), eine Austauscheinheit (330) und eine Modulationseinheit (340) umfasst;
Durchführen einer Signalverarbeitung an dem niederfrequenten digitalen Übertragungssignal durch das Signalverarbeitungsmodul (200), um ein hochfrequentes analoges Übertragungssignal zu erhalten, und Durchführen einer Signalverarbeitung an dem niederfrequenten digitalen Übertragungssignal, um ein hochfrequentes analoges Übertragungssignal zu erhalten; und
Aussenden des hochfrequenten analogen Übertragungssignals und des hochfrequenten analogen Abdeckungssignals durch das Hochfrequenzsignal-Sende-Empfangs-Modul (100);
wobei die Durchführung einer Basisband-Datenverarbeitung an dem niederfrequenten digitalen Übertragungssignal durch ein Basisband-Datenverarbeitungsmodul (300) und die Durchführung der Basisband-Datenverarbeitung an dem niederfrequenten digitalen Übertragungssignal umfasst:
Demodulieren des empfangenen niederfrequenten digitalen Übertragungssignals durch die Demodulationseinheit (310), um auszutauschende Benutzerdaten zu erhalten, und Übertragen der auszutauschenden Benutzerdaten an die Verifikationseinheit (320); und Demodulieren des empfangenen niederfrequenten digitalen Übertragungssignals durch die Demodulationseinheit (310), um auszutauschende Kernnetzdaten zu erhalten, und Übertragen der auszutauschenden Kernnetzdaten an die Verifikationseinheit (320);
Verifizieren der auszutauschenden Benutzerdaten und der auszutauschenden Kernnetzdaten, die empfangen werden, durch die Verifizierungseinheit (320), und Übertragen der verifizierten Benutzerdaten, die ausgetauscht werden sollen, und der verifizierten Kernnetzdaten, die ausgetauscht werden sollen, an die Austauscheinheit (330); und Verifizieren der Benutzeraustauschdaten und der Kernnetzaustauschdaten, die von der Austauscheinheit (330) übertragen werden, durch die Verifizierungseinheit (320), und Übertragen der verifizierten Benutzeraustauschdaten und der verifizierten Kernnetzaustauschdaten an die Modulationseinheit (340);
Konvertieren der empfangenen auszutauschenden Benutzerdaten durch die Austauscheinheit (330) in Kernnetzaustauschdaten und Übertragen der Kernnetzaustauschdaten an die Verifizierungseinheit (320); und Konvertieren der empfangenen auszutauschenden Kernnetzdaten durch die Austauscheinheit (330) in Benutzeraustauschdaten und Übertragen der Benutzeraustauschdaten an die Verifizierungseinheit (320); und
Modulation der empfangenen Kernnetz-Vermittlungsdaten durch die Modulationseinheit (340) in das niederfrequente digitale Übertragungssignal und Übermittlung des niederfrequenten digitalen Übertragungssignals an das Signalverarbeitungsmodul (200); und Modulation der empfangenen Benutzer-Vermittlungsdaten durch die Modulationseinheit (340) in das niederfrequente digitale Übertragungssignal und Übermittlung des niederfrequenten digitalen Übertragungssignals an das Signalverarbeitungsmodul (200).

## Revendications

1. Station de base 5G à haute fréquence applicable à un réseau mobile 5G à haute fréquence, comprenant : un module émetteur-récepteur de signaux à haute fréquence (100), un module de traitement des signaux (200) et un module de traitement des données en bande de base (300), dans lequel
le module émetteur-récepteur de signaux haute fréquence (100) est configuré pour transmettre au moins un signal de transmission analogique haute fréquence et un signal de couverture analogique haute fréquence qui sont reçus par le module de traitement des signaux (200), et pour émettre au moins un signal de transmission analogique haute fréquence et un signal de couverture analogique haute fréquence qui sont renvoyés par le module de traitement des signaux (200), le signal de transmission analogique haute fréquence étant un signal d'interaction entre la station de base 5G haute fréquence et un coeur de réseau, et le signal de couverture analogique haute fréquence étant un signal d'interaction entre la station de base 5G haute fréquence et un côté utilisateur ;
le module de traitement des signaux (200) est configuré pour traiter le signal de transmission analogique haute fréquence reçu afin d'obtenir un signal de transmission numérique basse fréquence et de transmettre le signal de transmission numérique basse fréquence obtenu par traitement au module de traitement des données en bande de base (300), et pour traiter le signal de couverture analogique haute fréquence reçu afin d'obtenir un signal de couverture numérique basse fréquence et de transmettre le signal de couverture numérique basse fréquence obtenu par traitement au module de traitement des données en bande de base (300) ; traiter un signal de transmission numérique basse fréquence transmis par le module de traitement des données en bande de base (300) pour obtenir un signal de transmission analogique haute fréquence et transmettre le signal de transmission analogique haute fréquence obtenu par traitement au module émetteur-récepteur de signaux haute fréquence (100), et traiter un signal de couverture numérique basse fréquence transmis par le module de traitement des données en bande de base (300) pour obtenir un signal de couverture analogique haute fréquence et transmettre le signal de couverture analogique haute fréquence obtenu par traitement au module émetteur-récepteur de signaux haute fréquence (100) ; et
le module de traitement des données en bande de base (300) est configuré pour convertir le signal de couverture numérique basse fréquence transmis par le module de traitement des signaux (200) en signal de transmission numérique basse fréquence et pour transmettre le signal de transmission numérique basse fréquence obtenu par conversion au module de traitement des signaux (200) ; et pour convertir le signal de transmission numérique basse fréquence transmis par le module de traitement des signaux (200) en signal de couverture numérique basse fréquence et pour transmettre le signal de couverture numérique basse fréquence obtenu par conversion au module de traitement des signaux (200) ;
dans lequel le module de traitement des données en bande de base (300) comprend une unité de démodulation (310), une unité de vérification (320), une unité d'échange (330) et une unité de modulation (340), dans lequel :
l'unité de démodulation (310) est configurée pour démoduler le signal de couverture numérique basse fréquence reçu afin d'obtenir des données utilisateur à échanger et de transmettre les données utilisateur à échanger à l'unité de vérification (320), et pour démoduler le signal de transmission numérique basse fréquence reçu afin d'obtenir des données de réseau central à échanger et de transmettre les données de réseau central à échanger à l'unité de vérification (320) ;
l'unité de vérification (320) est configurée pour dé-vérifier les données d'utilisateur à échanger et les données de réseau central à échanger qui sont reçues et transmettre les données d'utilisateur à échanger dé-vérifiées et les données de réseau central à échanger dé-vérifiées à l'unité d'échange (330), et dans laquelle l'unité de vérification (320) est configurée pour vérifier les données d'échange d'utilisateur et les données d'échange de réseau central qui sont transmises par l'unité d'échange (330) et transmettre les données d'échange d'utilisateur vérifiées et les données d'échange de réseau central vérifiées à l'unité de modulation (340) ;
l'unité d'échange (330) est configurée pour convertir les données d'utilisateur reçues à échanger en données d'échange de réseau central et transmettre les données d'échange de réseau central à l'unité de vérification (320), et pour convertir les données de réseau central reçues à échanger en données d'échange d'utilisateur et transmettre les données d'échange d'utilisateur à l'unité de vérification (320) ; et
l'unité de modulation (340) est configurée pour moduler les données d'échange du réseau central reçues dans le signal de transmission numérique à basse fréquence et transmettre le signal de transmission numérique à basse fréquence au module de traitement des signaux (200), et dans lequel l'unité de modulation (340) est configurée pour moduler les données d'échange de l'utilisateur reçues dans le signal de couverture numérique à basse fréquence et transmettre le signal de couverture numérique à basse fréquence au module de traitement des signaux (200).

2. La station de base 5G haute fréquence selon la revendication 1, dans laquelle le module de traitement du signal (200) comprend une unité de filtrage (210), une unité de contrôle de la puissance (220) et une unité de traitement numérique (230), dans laquelle :
l'unité de filtrage (210) est configurée pour filtrer au moins un des signaux de transmission analogique à haute fréquence et le signal de couverture analogique à haute fréquence qui sont reçus et pour transmettre au moins un des signaux de transmission analogique à haute fréquence filtrés et le signal de couverture analogique à haute fréquence filtré à l'unité de commande de puissance (220), et filtrer au moins un signal de transmission analogique à haute fréquence et un signal de couverture analogique à haute fréquence qui sont renvoyés par l'unité de commande de puissance (220) et transmettre au moins un signal de transmission analogique à haute fréquence filtré et un signal de couverture analogique à haute fréquence filtré au module émetteur-récepteur de signaux à haute fréquence (100) ;
l'unité de commande de puissance (220) est configurée pour convertir le signal de couverture analogique haute fréquence reçu en un signal de couverture analogique de fréquence intermédiaire et pour transmettre le signal de couverture analogique de fréquence intermédiaire obtenu par conversion à l'unité de traitement numérique (230), et pour convertir le signal de transmission analogique haute fréquence reçu en un signal de transmission analogique de fréquence intermédiaire et pour transmettre le signal de transmission analogique de fréquence intermédiaire obtenu par conversion à l'unité de traitement numérique (230), et dans lequel l'unité de commande de puissance (220) est configurée pour convertir un signal de couverture analogique de fréquence intermédiaire transmis par l'unité de traitement numérique (230) en un signal de couverture analogique de haute fréquence et transmettre le signal de couverture analogique de haute fréquence obtenu par conversion à l'unité de filtrage (210), et pour convertir un signal de transmission analogique de fréquence intermédiaire transmis par l'unité de traitement numérique (230) en un signal de transmission analogique de haute fréquence et transmettre le signal de transmission analogique de haute fréquence à l'unité de filtrage (210) ; et
l'unité de traitement numérique (230) est configurée pour convertir le signal de couverture analogique de fréquence intermédiaire reçu en un signal de couverture numérique de basse fréquence et pour transmettre le signal de couverture numérique de basse fréquence obtenu par conversion au module de traitement des données en bande de base (300), et pour convertir le signal de transmission analogique de fréquence intermédiaire reçu en un signal de transmission numérique de basse fréquence et pour transmettre le signal de transmission numérique de basse fréquence obtenu par conversion au module de traitement des données en bande de base (300), et dans lequel l'unité de traitement numérique (230) est configurée pour convertir le signal de couverture numérique basse fréquence transmis par le module de traitement des données en bande de base (300) en un signal de couverture analogique de fréquence intermédiaire et pour transmettre le signal de couverture analogique de fréquence intermédiaire obtenu par conversion à l'unité de commande de puissance (220), et pour convertir le signal de transmission numérique basse fréquence transmis par le module de traitement des données en bande de base (300) en un signal de transmission analogique de fréquence intermédiaire et pour transmettre le signal de transmission analogique de fréquence intermédiaire obtenu par conversion à l'unité de commande de puissance (220).

3. La station de base 5G à haute fréquence selon la revendication 2, dans laquelle l'unité de contrôle de la puissance (220) comprend une sous-unité de réception et une sous-unité de transmission, dans laquelle :
la sous-unité de réception est configurée pour effectuer l'amplification du signal et la conversion vers le bas du signal de couverture analogique à haute fréquence transmis par l'unité de filtrage (210) afin d'obtenir le signal de couverture analogique à fréquence intermédiaire et de transmettre le signal de couverture analogique à fréquence intermédiaire à l'unité de traitement numérique (230), et dans laquelle la sous-unité de réception est également configurée pour effectuer l'amplification du signal et la conversion vers le bas du signal de transmission analogique à haute fréquence transmis par l'unité de filtrage (210) afin d'obtenir le signal de transmission analogique à fréquence intermédiaire et de transmettre le signal de transmission analogique à fréquence intermédiaire à l'unité de traitement numérique (230), et
la sous-unité d'émission est configurée pour effectuer une amplification de puissance et une conversion ascendante du signal de couverture analogique de fréquence intermédiaire transmis par l'unité de traitement numérique (230) afin d'obtenir le signal de couverture analogique de haute fréquence et de transmettre le signal de couverture analogique de haute fréquence à l'unité de filtrage (210), et dans laquelle la sous-unité d'émission est en outre configurée pour effectuer une amplification de puissance et une conversion ascendante du signal de transmission analogique de fréquence intermédiaire transmis par l'unité de traitement numérique (230) afin d'obtenir le signal de transmission analogique de haute fréquence et de transmettre le signal de transmission analogique de haute fréquence à l'unité de filtrage (210).

4. La station de base 5G à haute fréquence selon la revendication 2, dans laquelle l'unité de traitement numérique (230) comprend une sous-unité de traitement numérique de couverture et une sous-unité de traitement numérique de transmission, dans laquelle :
la sous-unité de traitement numérique de couverture est configurée pour effectuer une conversion analogique-numérique et une conversion vers le bas du signal de couverture analogique de fréquence intermédiaire reçu afin d'obtenir le signal de couverture numérique de basse fréquence et de transmettre le signal de couverture numérique de basse fréquence au module de traitement des données en bande de base (300), et dans laquelle la sous-unité de traitement numérique de couverture est configurée pour effectuer une conversion vers le haut, un filtrage et un traitement d'écrêtage de crête du signal de couverture numérique de basse fréquence transmis par le module de traitement des données en bande de base (300) afin d'obtenir le signal de couverture analogique de fréquence intermédiaire et de transmettre le signal de couverture analogique de fréquence intermédiaire à une sous-unité d'émission ; et
la sous-unité de traitement numérique de la transmission est configurée pour effectuer une conversion analogique-numérique et une conversion vers le bas du signal de transmission analogique de fréquence intermédiaire reçu afin d'obtenir le signal de transmission numérique de basse fréquence et de transmettre le signal de transmission numérique de basse fréquence au module de traitement des données en bande de base (300), et dans laquelle la sous-unité de traitement numérique de la transmission est configurée pour effectuer une conversion vers le haut, un filtrage et un traitement d'écrêtage du signal de transmission numérique de basse fréquence qui est transmis par le module de traitement des données en bande de base (300) afin d'obtenir le signal de transmission analogique de fréquence intermédiaire et de transmettre le signal de transmission analogique de fréquence intermédiaire à la sous-unité de transmission.

5. La station de base 5G à haute fréquence selon la revendication 1, dans laquelle l'unité de démodulation (310) comprend une sous-unité de démodulation de couverture et une sous-unité de démodulation de transmission, dans laquelle :
la sous-unité de démodulation de la couverture est configurée pour effectuer la décompilation des ressources, le décodage, la décompilation des couches, la démodulation, la décompensation du débit du signal numérique de couverture basse fréquence reçu afin d'obtenir les données d'utilisateur à échanger, et pour transmettre les données d'utilisateur à échanger à l'unité de vérification (320) ; et
la sous-unité de démodulation de la transmission est configurée pour effectuer la déstructuration des ressources, le multiplexage général, la déstructuration des couches, la démodulation, la déstructuration du débit sur le signal de transmission numérique à basse fréquence reçu afin d'obtenir les données du réseau central à échanger, et pour transmettre les données du réseau central à échanger à l'unité de vérification (320).

6. Station de base 5G à haute fréquence selon la revendication 1, dans laquelle l'unité de modulation (340) comprend une sous-unité de modulation de transmission et une sous-unité de modulation de couverture, dans laquelle :
la sous-unité de modulation de transmission est configurée pour effectuer un codage de canal, une adaptation de débit, une modulation, un multiplexage général, une mise en correspondance des ressources, une transformation de Fourier rapide et une modulation d'ordre élevé sur les données d'échange du réseau central reçues de manière à moduler les données d'échange du réseau central reçues en un signal de transmission numérique à basse fréquence et à transmettre le signal de transmission numérique à basse fréquence au module de traitement des signaux (200) ; et
la sous-unité de modulation de couverture est configurée pour effectuer un codage de canal, une adaptation de débit, une modulation, une mise en correspondance de couches, une mise en correspondance de ressources, une transformée de Fourier rapide et un multiplexage par répartition orthogonale de la fréquence sur les données d'échange de l'utilisateur reçues de manière à moduler les données d'échange de l'utilisateur reçues dans le signal numérique de couverture à basse fréquence, et à transmettre le signal numérique de couverture à basse fréquence au module de traitement des signaux (200).

7. Station de base 5G à haute fréquence selon la revendication 1, dans laquelle le module de traitement des données en bande de base (300) comprend en outre :
une unité de séparation, configurée pour séparer un signal de couverture numérique basse fréquence ou un signal de transmission numérique basse fréquence d'un signal série reçu et transmettre le signal de couverture numérique basse fréquence ou le signal de transmission numérique basse fréquence à l'unité de démodulation (310).

8. La station de base 5G à haute fréquence selon la revendication 7, dans laquelle l'unité de séparation comprend une sous-unité de séparation de couverture et une sous-unité de séparation de transmission, dans laquelle :
la sous-unité de séparation de couverture est configurée pour séparer le signal de couverture numérique basse fréquence du signal série reçu au moyen d'un rééchantillonnage par filtrage et d'une transformée de Fourier rapide et pour transmettre le signal de couverture numérique basse fréquence à l'unité de démodulation (310) ; et
la sous-unité de séparation des transmissions est configurée pour séparer le signal de transmission numérique à basse fréquence du signal série reçu au moyen d'un échantillonnage de données par micro-ondes et d'une transformée de Fourier rapide, et pour transmettre le signal de transmission numérique à basse fréquence à l'unité de démodulation (310).

9. Méthode de traitement du signal d'une station de base 5G à haute fréquence, comprenant :
recevoir, par un module émetteur-récepteur de signaux haute fréquence (100) d'une station de base 5G haute fréquence, au moins un signal de transmission analogique haute fréquence et un signal de couverture analogique haute fréquence, le signal de transmission analogique haute fréquence étant un signal d'interaction entre une station de base 5G haute fréquence et un coeur de réseau, et le signal de couverture analogique haute fréquence étant un signal d'interaction entre la station de base 5G haute fréquence et un utilisateur ;
effectuer, par un module de traitement des signaux (200), le traitement des signaux à la station de base 5G à haute fréquence, le traitement des signaux au signal de transmission analogique à haute fréquence pour obtenir un signal de transmission numérique à basse fréquence, et effectuer le traitement des signaux au signal de couverture analogique à haute fréquence pour obtenir un signal de couverture numérique à basse fréquence ;
effectuer, par un module de traitement des données en bande de base (300) de la station de base 5G à haute fréquence, un traitement des données en bande de base sur le signal de couverture numérique à basse fréquence afin de convertir le signal de couverture numérique à basse fréquence en un signal de transmission numérique à basse fréquence, et effectuer un traitement des données en bande de base sur le signal de transmission numérique à basse fréquence afin de convertir le signal de transmission numérique à basse fréquence en un signal de couverture numérique à basse fréquence ; le module de traitement des données en bande de base (300) comprend une unité de démodulation (310), une unité de vérification (320), une unité d'échange (330) et une unité de modulation (340) ;
le module de traitement des signaux (200) traite le signal de transmission numérique à basse fréquence afin d'obtenir un signal de transmission analogique à haute fréquence, et traite le signal de couverture numérique à basse fréquence afin d'obtenir un signal de couverture analogique à haute fréquence ; et
émettre, par le module émetteur-récepteur de signaux à haute fréquence (100), le signal de transmission analogique à haute fréquence et le signal de couverture analogique à haute fréquence ;
dans lequel l'exécution, par un module de traitement des données en bande de base (300), du traitement des données en bande de base sur le signal de couverture numérique à basse fréquence et l'exécution du traitement des données en bande de base sur le signal de transmission numérique à basse fréquence comprennent :
démodulation, par l'unité de démodulation (310), du signal de couverture numérique à basse fréquence reçu pour obtenir les données utilisateur à échanger, et transmission des données utilisateur à échanger à l'unité de vérification (320) ; et démodulation, par l'unité de démodulation (310), du signal de transmission numérique à basse fréquence reçu pour obtenir les données de réseau central à échanger, et transmission des données de réseau central à échanger à l'unité de vérification (320) ;
dé-vérifier, par l'unité de vérification (320), les données d'utilisateur à échanger et les données de réseau central à échanger qui sont reçues, et transmettre les données d'utilisateur à échanger dé-vérifiées et les données de réseau central à échanger dé-vérifiées à l'unité d'échange (330) ; et vérifier, par l'unité de vérification (320), les données d'échange d'utilisateur et les données d'échange de réseau central qui sont transmises par l'unité d'échange (330), et transmettre les données d'échange d'utilisateur vérifiées et les données d'échange de réseau central vérifiées à l'unité de modulation (340) ;
convertir, par l'unité d'échange (330), les données reçues de l'utilisateur à échanger en données d'échange du réseau central et transmettre les données d'échange du réseau central à l'unité de vérification (320) ; et convertir, par l'unité d'échange (330), les données reçues du réseau central à échanger en données d'échange de l'utilisateur et transmettre les données d'échange de l'utilisateur à l'unité de vérification (320) ; et
moduler, par l'unité de modulation (340), les données d'échange du réseau central reçues dans le signal de transmission numérique à basse fréquence et transmettre le signal de transmission numérique à basse fréquence au module de traitement des signaux (200) ; et moduler, par l'unité de modulation (340), les données d'échange de l'utilisateur reçues dans le signal de couverture numérique à basse fréquence et transmettre le signal de couverture numérique à basse fréquence au module de traitement des signaux (200).
